(19) Europäisches Patentamt / European Patent Office / Office européen des brevets

(11) **EP 2 442 471 A1**

(12) **EUROPEAN PATENT APPLICATION**
published in accordance with Art. 153(4) EPC

(43) Date of publication:
**18.04.2012 Bulletin 2012/16**

(51) Int Cl.:
*H04J 99/00* *(2009.01)*     *H04B 7/04* *(2006.01)*
*H04B 7/06* *(2006.01)*     *H04J 11/00* *(2006.01)*

(21) Application number: **10786251.8**

(22) Date of filing: **11.06.2010**

(86) International application number:
**PCT/JP2010/059973**

(87) International publication number:
**WO 2010/143720 (16.12.2010 Gazette 2010/50)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **12.06.2009 JP 2009141159**

(71) Applicant: **Mitsubishi Electric Corporation
Tokyo 100-8310 (JP)**

(72) Inventor: **NAKAJIMA, Akinori
Tokyo 100-8310 (JP)**

(74) Representative: **Pfenning, Meinig & Partner GbR
Patent- und Rechtsanwälte
Theresienhöhe 13
80339 München (DE)**

(54) **COMMUNICATION APPARATUS**

(57)   The configuration of a system for conventional MIMO-OFDM transmission is complicated because different phase rotations are applied to respective subcarriers and antennas. Therefore, a system includes: a copy unit (004) that copies a group composed of a predetermined number of symbols and a predetermined number of subcarriers to produce a plurality of groups; a phase rotation unit (006) that applies different phase rotations to the plurality of copied groups; and a plurality of transmitting antennas (009) that transmits, to a receiver, the plurality of respective groups to which the phase rotations have been applied.

FIG.1

**Description**

Field

The present invention relates to a communication device that performs communications between one or more transmitting stations and one or more receiving stations through communication channels.

Background

In communications between a transmitter and a receiver each using a multi-antenna system composed of one or more antennas, it is known to use transmitting signal processing for the purpose of improving the quality of communications. For example, Patent Literature 1 discloses a technique for MIMO (Multi Input-Multi Output)-OFDM (Orthogonal Frequency Division Multiplexing) transmission used for the purpose of improving transmission rate. In this technique, for the purpose of improving the quality of communications, random phase rotations are applied to respective subcarriers and antennas.

A description will next be given of the conventional technology. The conventional technology is aimed at MIMO-OFDM transmission, and a spatial multiplexing technique is used in which different signals are simultaneously transmitted for each subcarrier from different antennas. In MIMO-OFDM transmission under frequency selective fading environment, it is known that frequency selectivity functions as a frequency diversity effect during error correction decoding, and good error rate characteristics are thereby obtained. The conventional technology utilizes the above property. More specifically, on the transmitting side, different streams for different subcarriers are multiplied by orthogonal matrices and random phase rotations. Then the resultant streams are combined, and the combined transmission signals are transmitted. On the receiving side, the signals are detected using the known amounts of random phase rotations or after the amounts of random phase rotations are estimated. In the above processing, the transmission with random phase rotations allows frequency selectivity to be obtained equally for the propagation paths. Therefore, the benefit from the frequency diversity effect is higher than that when no phase rotation is applied, and better characteristics are obtained.

Citation List

Patent Literature

Patent Literature 1: Japanese Patent Application Laid-open No. 2006-081131

Summary

Technical Problem

In the above configuration, different phase rotations are applied to respective subcarriers and antennas, so that the configuration of the system is complicated. Therefore, there is a demand for a system that can improve the transmission quality in a simpler and more efficient manner.

The present invention has been made in view of the above circumstances, and it is an object to improve the transmission quality in multi-antenna transmission in a simple and efficient manner.

According to the present invention, included are a copy unit that copies a group composed of a predetermined number of symbols for one or a plurality of carriers to produce a plurality of groups; a phase rotation unit that applies different phase rotations to the plurality of groups; and a plurality of transmitting antennas that transmits, to a receiver, the plurality of respective groups to which the phase rotations have been applied.

Advantageous Effects of Invention

According to the present invention, the transmission quality in multi-antenna transmission can be improved in a simple and efficient manner.

Brief Description of Drawings

FIG. 1 is a diagram of the configuration of a transmitter in a first embodiment.
FIG. 2 is a diagram of the configuration of a receiver in the first embodiment.
FIG. 3 is a diagram of another configuration of the transmitter in the first embodiment.
FIG. 4 is a diagram of the configuration of a transmitter in a second embodiment.
FIG. 5 is a diagram of another configuration of the transmitter in the second embodiment.
FIG. 6 is a diagram of the configuration of a receiver in the second embodiment.
FIG. 7 is a diagram of the configuration of a transmitter in a third embodiment.
FIG. 8 is a diagram of another configuration of the transmitter in the third embodiment.

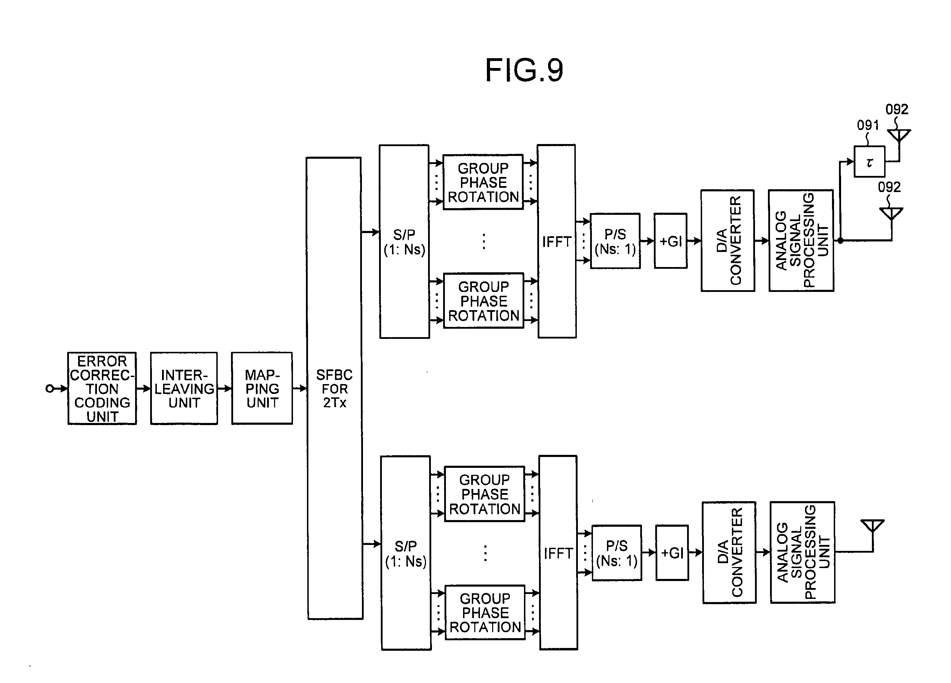

FIG. 9 is a diagram of the configuration of a transmitter in a fifth embodiment.
FIG. 10 is a diagram of another configuration of the transmitter in the fifth embodiment.
FIG. 11 is a diagram illustrating a group in the first embodiment.
FIG. 12 is a diagram illustrating another group in the first embodiment.

Description of Embodiments

First Embodiment

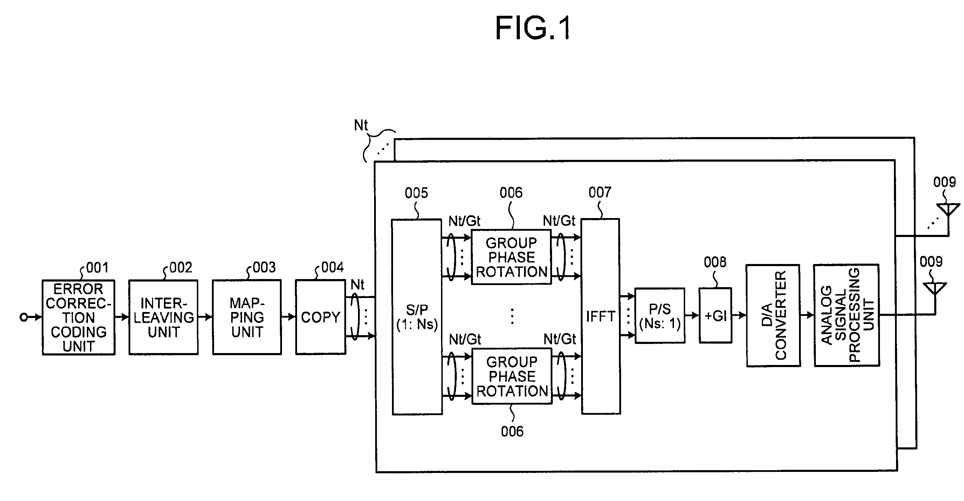

In the present embodiment, a description will be given of an example in which, in transmission with a multi-antenna transmission diversity system for transmitting a single signal from a plurality of transmitting antennas, a phase rotation is applied to each group according to predetermined rules so that high communication quality can be achieved. The description is given based on FIGS. 1, 2, and 3. In the following description, it is assumed that an OFDM modulation scheme is used. However, the modulation scheme is not limited to the OFDM modulation, and the invention is also applicable to single carrier transmission. The number of receiving antennas is one, but the invention is not limited thereto. In addition, the transmission scheme is not limited to the transmission diversity scheme for single signal transmission, and the invention is also applicable to spatial multiplex transmission.

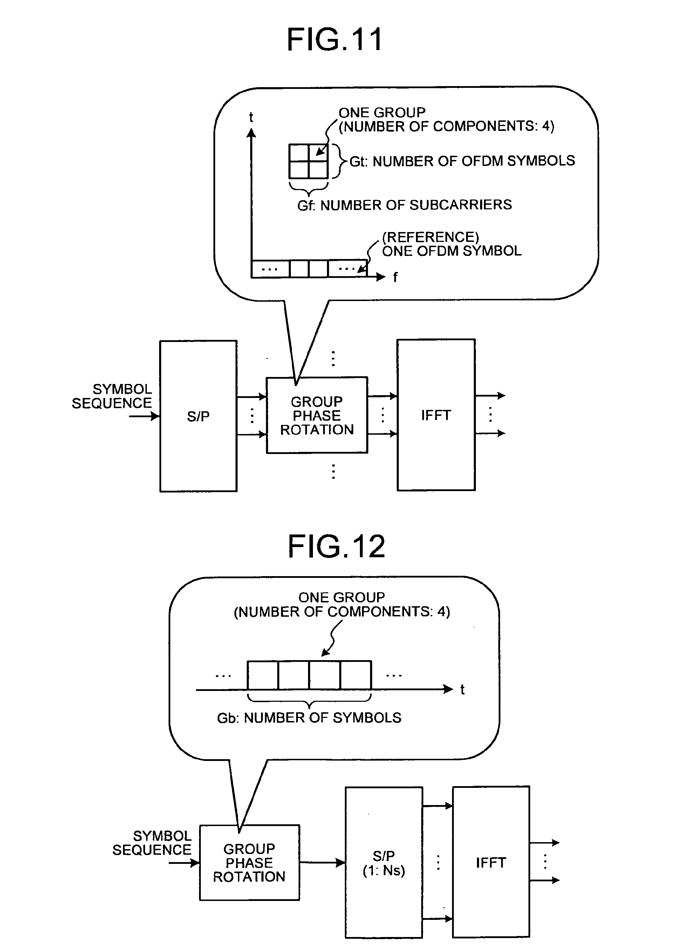

In the first embodiment, it is assumed that a multi-antenna system is used in which the number of transmitting antennas is Nt and the number of receiving antennas is Nr. Signal grouping is performed such that the number of components is Gf subcarriers and Gt symbols for the OFDM symbol and signals are grouped in the above units. An example is shown in FIG. 11. In this example, the number of components is 4, i.e., Gf = 2 and Gt = 2. A single phase rotation is applied to the components in this group. Let M be any positive number. Then the relation M x Nt = Gf x Gt is satisfied. In the following description, M = 1, but M is not limited to 1. In the case where the information on the phase rotations performed on the transmission side is not stored in a memory on the receiving side and decoding is performed after the phase rotation information is estimated, the above restriction also gives the effect of reducing the number of candidates for the phase rotations to be estimated.

In a transmitter shown in FIG. 1, first, error correction coding is performed in an error correction coding unit 001. Then bit interleaving is performed in an interleaving unit 002. Next, symbol modulation is performed in a mapping unit 003, and the serial symbol sequence after symbol modulation is copied in a copy unit 004 to make serial symbol sequences equal in number to the number of transmitting antennas. Next, serial-to-parallel conversion is performed in a serial-to-parallel (S/P) conversion unit 005, and transmission symbols are assigned to respective subcarriers. Then a phase rotation is applied to each group in each group phase rotation unit 006. As described above, for each transmitting antenna, Gf subcarriers (the number of subcarriers is Gf) are treated as one group. To a transmitting signal S(f,t) in an f-th subcarrier in an nt-th transmitting antenna, a phase rotation represented by the following formula
[Formula 1]

$$P_{n_t}(f,t)$$

is applied and the transmitting signal after the phase rotation
[Formula 2]

$$\bar{S}_{n_t}(f,t).$$

is obtained. That is,
**[0017]**

[Formula 3]

$$\bar{S}_{n_t}(f, t) = P_{n_t}(f, t)S(f, t).$$

as above. Here, t corresponds to an OFDM symbol number. In addition,
**[0019]**

[Formula 4]

$$P_{n_t}(f, t)$$

is given by the following formula:
[Formula 5]

$$P_{n_t}(f, t) = \exp\left\{j2\pi C_{n_t} \frac{\left(\lfloor f / G_f \rfloor + \lfloor t / G_t \rfloor + 1\right)}{Ns}\right\}.$$

Here,
**[0023]**

[Formula 6]

$$\lfloor x \rfloor$$

represents a maximum integer equal to or less than x.
[Formula 7]

$$C_{n_t}$$

is a constant assigned to each antenna. This is a parameter that determines the phase difference in phase rotation between adjacent groups, and the value of the parameter Cnt can be any real number from -infinity to +infinity. Ns is the total number of subcarriers.
In the present embodiment, group phase rotations are applied according to the rule that a constant phase difference is given between adjacent groups adjacent in one of a frequency axis direction (t direction = subcarrier direction) and a time axis direction (f direction = symbol direction). The amount of phase rotation applied to each of a plurality of groups may be such that the total amount in the band used is at least 360°. In the above example of the phase rotations, the amount of rotations in the band used can be determined using the parameter Cnt. Therefore, if Cunt ≥ Gf, the amount of phase rotations in the band used is 360° or more. The amounts of phase rotations applied to adjacent groups are determined by the total number of subcarriers and the number of subcarriers in one group. However, the determination of the amounts of phase rotations is not limited to the above formula. No particular limitation is imposed on the determination method. A random phase may be applied to each group, or the same group phase rotation may be applied to some of the plurality of groups.
The transmitting signals to which phase rotations have been applied are subjected to inverse FFT in an inverse Fourier transformation (IFFT) unit 007 to generate an OFDM signal. Next, in a guard interval insertion unit 008, guard insertion is performed. The resultant OFDM signal passes through a D/A converter and an analog signal processing unit and is then transmitted from each one of Nt antennas 009.

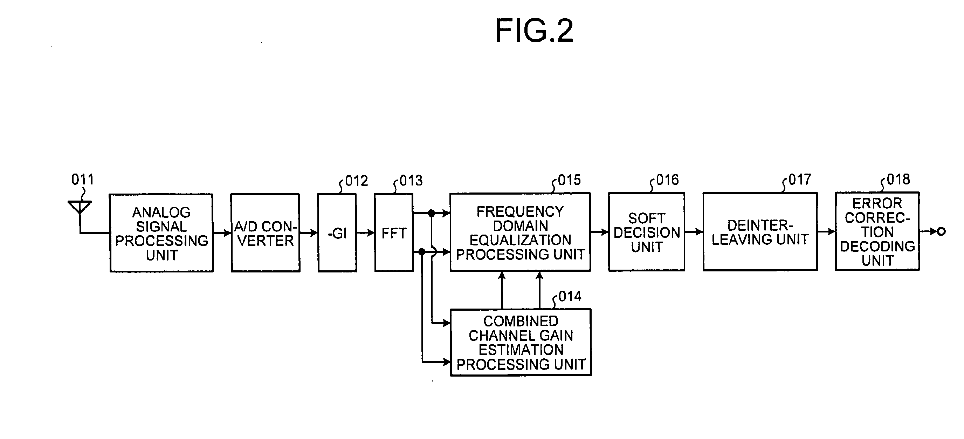

The transmitted Nt OFDM signals are received by a receiver having the configuration shown in FIG. 2 through respective multi-path propagation paths. The received signal obtained by a receiving antenna 011 is subjected to guard removal in a guard interval removal unit 12 and then subjected to FFT in a Fourier transformation (FFT) unit 013. Each frequency-domain received signal is represented as follows.

[Formula 8]

$$R(f, t) = \sum_{n_t = 0}^{N_t - 1} H_{n_t}(f, t)\overline{S}_{n_t}(f, t) + N(f, t)$$
$$= \overline{H}(f, t)S(f, t) + N(f, t)$$

Here,
[0032]

[Formula 9]

$$H_{n_t}(f, t)$$

is the channel gain of the f-th subcarrier between the nt-th transmitting antenna and the receiving antenna.
[Formula 10]

$$N(f, t)$$

is noise.
[Formula 11]

$$\overline{H}(f, t)$$

is, to the channel gains between the respective transmitting antennas and the receiving antenna, phase rotations
[Formula 12]

$$P_{n_t}(f, t)$$

are applied to combine them to obtain a combined channel gain. The combined channel gain is represented as follows.
[Formula 13]

$$\overline{H}(f, t) = \sum_{n_t=0}^{N_{t-1}} H_{n_t}(f, t) P_{n_t}(f, t)$$

After each combined channel gain is estimated in a combined channel gain estimation processing unit 014, equalization/demodulation processing is performed for each subcarrier using the estimated combined channel gain in a frequency-domain equalization processing unit 015. The obtained received symbols are subjected to soft decision in a soft decision unit 016, subjected to deinterleaving in a deinterleaving unit 017, and then subjected to error correction decoding in an error correction decoding unit 018.

The channel gain after combining can increase frequency selectivity, and therefore a higher diversity effect can be expected. When a reference signal is transmitted with group phase rotations being similarly applied thereto, the channel estimation unit 014 for channel estimation can estimate the combined channel gain for each receiving antenna, and therefore the overall channel gain can be easily estimated at once without estimating all the channel gains between the respective transmitting antennas and the receiving antenna.

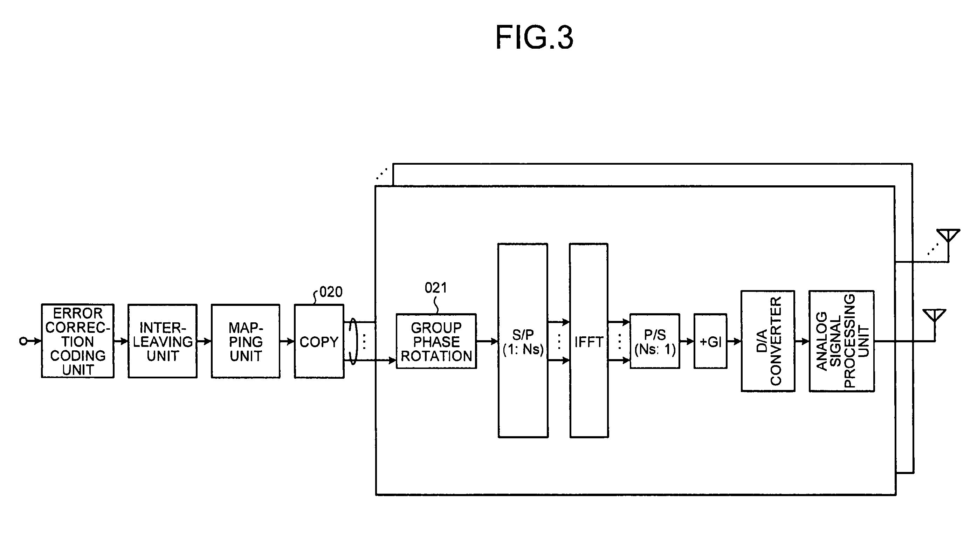

FIG. 3 is the configuration of a transmitter when transmission symbols (Gs) are used as components, and FIG. 12 shows an example of signal grouping when the components are transmission symbols. In this example, the grouping is performed on the time axis, and a predetermined number of symbols (4 symbols in FIG. 12) are grouped into one group. In FIG. 3, a sequence is copied in a copy unit 020 to make sequences equal in number to the number of transmitting antennas. Then, in each group phase rotation unit 021, group phase rotations are applied for each antenna. The resultant signals are transmitted as OFDM signals. A device having the same configuration as that shown in FIG. 2 can be used on the receiving side to receive the signals.

In the present embodiment, transmission with a diversity transmission system can be achieved in a simpler manner by increasing the number of components in each group. If the number of components is set to be smaller, channel variations can be apparently increased, so that the quality of reception can be improved further. If the number of components can be set to an optimal value, a high transmission diversity effect can be obtained in a relatively simple manner.

In the present embodiment, a multi-antenna system is used. However, the invention is not limited to the multi-antenna system and is also applicable to a single antenna system.

Second Embodiment

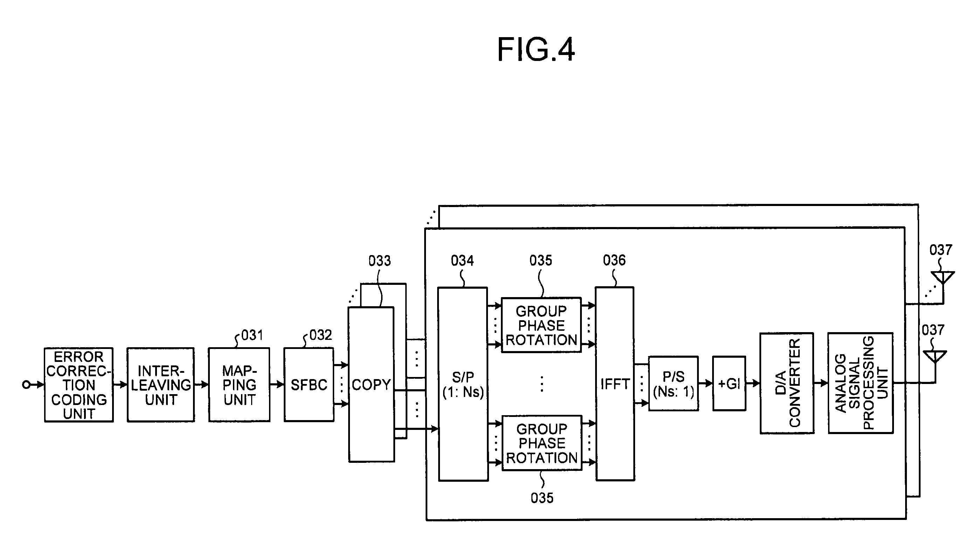

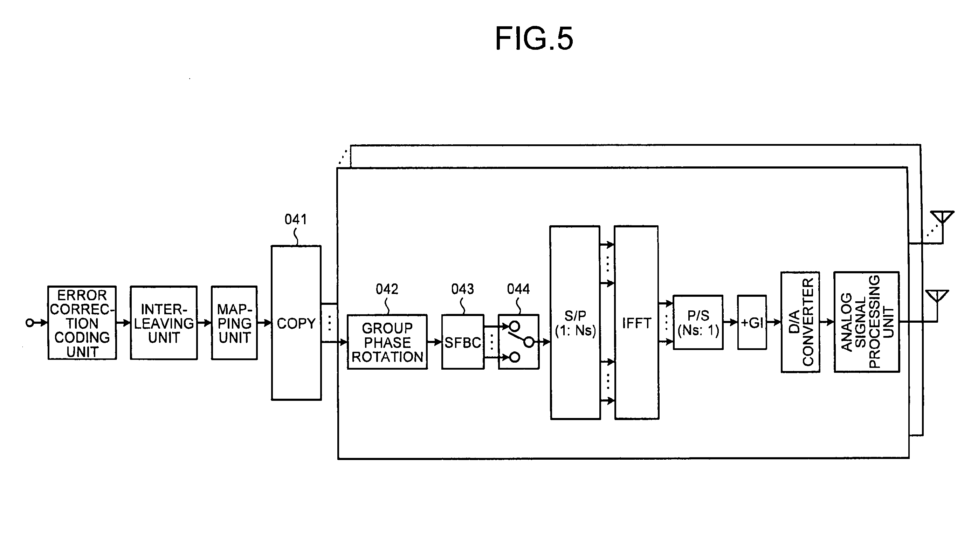

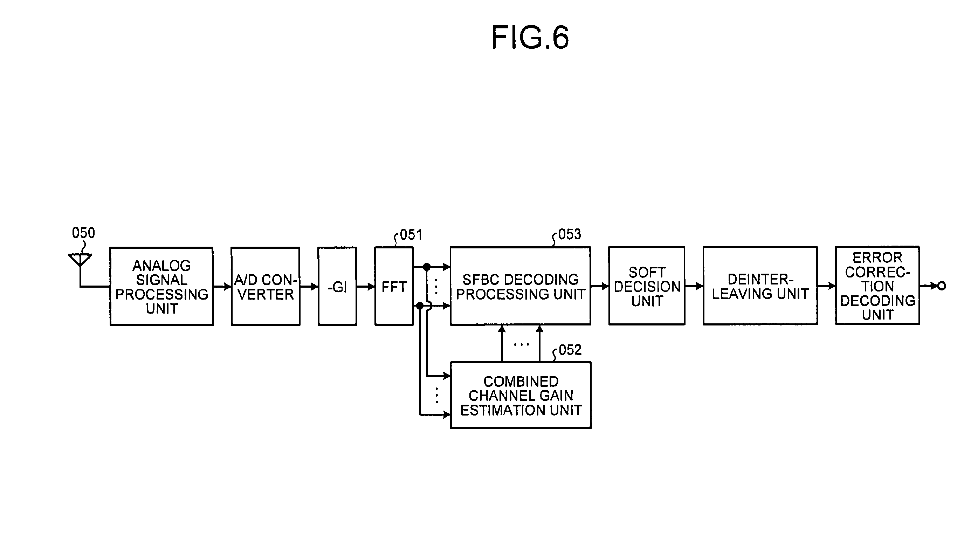

A second embodiment provides means that can provide high-quality communications in transmission using transmission coding by applying group phase rotation in consideration of the orthogonality of transmitting signals. FIGS. 4 and 5 show examples of the configurations of transmitter-receivers that use group phase rotation in consideration of the orthogonality in space frequency block coding (SFBC). FIG. 6 shows an example of the configuration of a receiver that uses group phase rotation in consideration of the orthogonality in the space frequency block coding (SFBC).

In the present embodiment, a description will be given of group phase rotation in a multi-antenna system having transmitting antennas equal in number to or greater in number than the number of transmitting antennas that is supported by the SFBC coding. However, the transmission coding used is generally determined from the number of transmitting antennas. For example, when the number of transmitting antennas is two, SFBC coding for two transmitting antennas is performed in which two transmission symbols are subjected to SFBC coding and the (two) coded symbols for two subcarriers are outputted to each of the (two) transmitting antennas. When the number of transmitting antennas is four, SFBC coding for four transmitting antennas is performed in which three symbols are subjected to SFBC coding and the (four) coded symbols for four subcarriers are outputted to each of the (four) transmitting antennas. In the following description, a plurality of coded symbols assigned to each of the transmitting antennas by SFBC coding are treated as one set, and the one set is defined as an SFBC-coded set.

In the present embodiment, SFBC is used as an example, but the invention is not limited thereto. Any transmission scheme may be used in which widely known transmission coding is used or the transmission coding and spatial multiplexing are combined. Although the subject is OFDM transmission, the invention is not limited thereto.

Although one transmission coding unit and a corresponding decoding unit are used, the invention is not limited thereto. A plurality of transmission coding units may be used, and phase rotation may further be applied in consideration of the orthogonality of the transmission codes. In the present embodiment, the number of receiving antennas is one, but the invention is not limited thereto.

First, the orthogonality in transmission coding will be described using an example of SFBC coding for two transmitting antennas. In this case, two transmission symbols are subjected to SFBC coding, and the two transmission coded symbols for two subcarriers are assigned to each of the antennas. The zero-th and first transmission symbols D (0) and D(1) are transmission-coded using the following formula and are assigned to the zero-th and first subcarriers for the zero-th and first transmitting antennas.

[Formula 14]

$$\begin{bmatrix} S_0(0) & S_1(0) \\ S_0(1) & S_1(1) \end{bmatrix} = \begin{bmatrix} D(0) & D(1) \\ -D^*(1) & D^*(0) \end{bmatrix}$$

Here, the index of S in S0(0) corresponds to a transmitting antenna number, and the number in () corresponds to a subcarrier number.

The signals assigned as described above are transmitted simultaneously, and the two transmitting signal having been transmitted are received through different propagation paths. The received signals are represented by the following formulas. In this case, it is assumed that the number of receiving antennas is one for simplicity, and noise is not taken into consideration.

[Formula 15]

$$\begin{cases} R(0) = H_0(0)D(0) + H_1(0)D(1) \\ R(1) = -H_0(1)D^*(1) + H_1(1)D^*(0) \end{cases}$$

Here, R(0) is a received signal, and the number in () corresponds to a subcarrier number. The index in H0(0) corresponds to a transmitting antenna number, and the number in () corresponds to a subcarrier number. Next, SFBC decoding is performed according to the following formulas.

[Formula 16]

$$\begin{cases} \hat{D}(0) = H_0^*(0)R(0) + H_1(1)R^*(1) \\ = (|H_0(0)|^2 + |H_1(1)|^2)D(0) + \{H_0^*(0)H_1(0) - H_0^*(1)H_1(1)\}D(1) \\ \hat{D}(1) = H_1^*(0)R(0) - H_0(1)R^*(1) \\ = (|H_1(0)|^2 + |H_0(1)|^2)D(1) + \{H_0(0)H_1^*(0) - H_0(1)H_1^*(1)\}D(0) \end{cases}$$

Assuming that the channel gains of adjacent subcarriers are equal to each other. Then the following formula holds.

[Formula 17]

$$H_0^*(0)H_1(0) = H_0^*(1)H_1(1)$$

Therefore, the results of SFBC decoding are maximal-ratio-combined, and the received signals can be obtained with no interference between D(0) and D(1).

[Formula 18]

$$\begin{cases} \hat{D}(0) = (\mid H_0(0) \mid^2 + \mid H_1(1) \mid^2)D(0) \\ \hat{D}(1) = (\mid H_1(0) \mid^2 + \mid H_0(1) \mid^2)D(1) \end{cases}$$

If different phase rotations are applied to adjacent subcarriers in the zero-th transmitting antenna and then SFBC decoding is performed on D(0),

[Formula 19]

$$e^{j\theta_0(0)}, \; e^{j\theta_0(1)}$$

[Formula 20]

$$\hat{D}(0) = (\mid H_0(0) \mid^2 + \mid H_1(1) \mid^2)D(0) + \left\{ H_0^*(0)H_1(0)e^{-j\theta_0(0)} - H_0^*(1)H_1(1)e^{-j\theta_0(1)} \right\} D(1)$$

is obtained.
Even when

[Formula 21]

$$H_0^*(0)H_1(0) = H_0^*(1)H_1(1)$$

holds, since
[Formula 22]

$$e^{j\theta_0(0)} \neq e^{j\theta_0(1)}$$

holds,
[0069]

[Formula 23]

$$H_0^*(0)H_1(0)e^{-j\theta_0(0)} - H_0^*(1)H_1(1)e^{-j\theta_0(1)} \neq 0$$

holds. Therefore, D(1) remains in the result of SFBC decoding of D(0). This is the break of the orthogonality. Therefore, to maintain the orthogonality, the subcarriers are grouped into groups each containing subcarriers equal in number to an integer multiple of the number of coded symbols constituting one SFBS coded set, and a single phase rotation is applied to the subcarriers in each of these groups. In the above case, phase rotations that satisfy
[Formula 24]

$$e^{j\theta_0(0)} = e^{j\theta_0(1)}$$

are applied. Incidentally, in the above example, no effect is obtained by the application of phase rotations. However, the above example is used to simply describe the break of the orthogonality.

In the second embodiment, as shown in FIG. 4, a serial symbol sequence subjected to symbol modulation in a mapping unit 031 is subjected to SFBC coding corresponding to the number of transmitting antennas in an SFBC coding unit 032. The above example corresponds to, for example, the following cases: the case in which, when the number of transmitting antennas is two, two transmission symbols are subjected to SFBC coding and the coded symbols for two subcarriers (i.e., two symbols) are outputted to each antenna; and the case in which, when the number of transmitting antennas is four, three symbols are subjected to SFBC coding and the coded symbols for four subcarriers (i.e., four symbols) are outputted to each antenna. Next, the coded transmitting signals obtained by the SFBC coding are assigned to a plurality of antennas in a copy unit 033. Then each signal is subjected to serial-to-parallel conversion in a serial-to-parallel (S/P) conversion unit 034, and the resultant transmission symbols are assigned to respective subcarriers. Then in a group phase rotation unit 035, a phase rotation is applied to each group.

In this case, each of the coded symbols subjected to SFBC coding is assigned to all the transmitting antennas at the same subcarrier position. In the second embodiment, group phase rotations similar to those in the first embodiment are applied. However, in consideration of the code orthogonality in transmission coding, Gf may be set to a multiple of the number of transmission coded sets. As described above, with the SFBC coding when the number of transmitting antennas is two, two symbols are subjected to SFBC coding, and coded symbols (two symbols) are assigned to two subcarriers. In the group phase rotation in this case, Gf = 2, and a single phase rotation is applied to two subcarriers. In this manner, the orthogonality of the signals of the coded symbol subjected to SFBC coding can be ensured. If different phase rotations are applied to the two subcarriers, the orthogonality of the signals of the two symbols used for the SFBC coding is broken, and the signals interfere with each other during SFBC decoding remain present.

The transmitting signals subjected to group phase rotation and assigned to respective subcarriers are converted to a time-domain transmitting signal in an inverse Fourier transformation (IFFT) unit 036. The resultant signal is transmitted from a corresponding one of a plurality of transmitting antennas 037. The transmitting signals to which phase rotations have been applied are received through multi-path propagation paths. As shown in FIG. 6, the received signal obtained by a receiving antenna 050 is subjected to FFT in a Fourier transformation unit 051 to convert the signal to frequency-domain received signals. Next, SFBC decoding is performed in an SFBC decoding processing unit 053 to demodulate the resultant signals using estimated combined channel values obtained in a combined channel gain estimation unit 052. To estimate the propagation path, a combined propagation path for a group of transmitting antennas that transmit an identical transmission coded sequence among a plurality of sequences transmitted from transmission coding is estimated. In this manner, the combined propagation path can be estimated easily. More specifically, in addition to assigning reference signals to the respective transmitting antennas, a group phase rotation is applied to each of the signals, and the resultant signals are transmitted. In this case, the combined propagation path can be estimated without adding and/or changing the estimation processing on the receiving side.

FIG. 5 shows the configuration of a transmitter when the number of symbols is used as the number of components. This example includes sequence selecting unit. After a sequence is copied in a copy unit 041 to make sequences equal in number to the number of transmitting antennas, a group phase rotation is applied (in each group phase rotation unit 042) for each antenna by a unit which is an integer multiple of the number of transmission coded sets. For example, when SFBC coding for four transmitting antennas where the number Nt of transmitting antennas = 4 is performed (in an SFBC coding unit 043), grouping is performed such that the number of components is equal to the number of symbols, namely, Gs = 4. After coded signal sequences to be transmitted from the respective antennas are selected in selection units 044, OFDM signals are transmitted. Any method of selecting a coded signal sequence may be used. One of four transmission coded sets may be selected periodically in each of the antennas.

In the present embodiment, single phase rotations are applied to the transmission coded sets. The group phase rotations are applied in consideration of the orthogonality of the transmitting signals subjected to transmission coding. Therefore, no break of the orthogonality of the codes occurs, and frequency selectivity can be imparted to equivalent channel gains after SFBC decoding for each transmission set. Therefore, a frequency diversity effect during error correction decoding can be expected.

As described above, even when single carrier transmission is used, a phase rotation can be applied to each of the groups. For example, SC-SFBC (single-carrier SFBC) introduced in the following literature can be used. In this case, frequency components having orthogonal relations are treated as frequency groups to group signals.

Ciochina, C.; Castelain, D.; Mottier, D.; Sari, H., "Single-Carrier Space-Frequency Block Coding: Performance Evaluation," Vehicular Technology Conference, 2007. VTC-2007 Fall. 2007 IEEE 66th Sept. 30 2007 - Oct. 3 2007 Page (s): 715-719

Third Embodiment

In a third embodiment, a more specific example of the second embodiment will be described. When transmission coding adapted to transmitting antennas is performed, transmission rate is generally reduced in transmission coding for obtaining full diversity if the number of transmitting antennas is 3 or more. In view of the above problem, in the following embodiment, the orthogonality in transmission coding is maintained while the reduction in transmission rate is suppressed, and the diversity gains for all the transmitting antennas can be obtained.

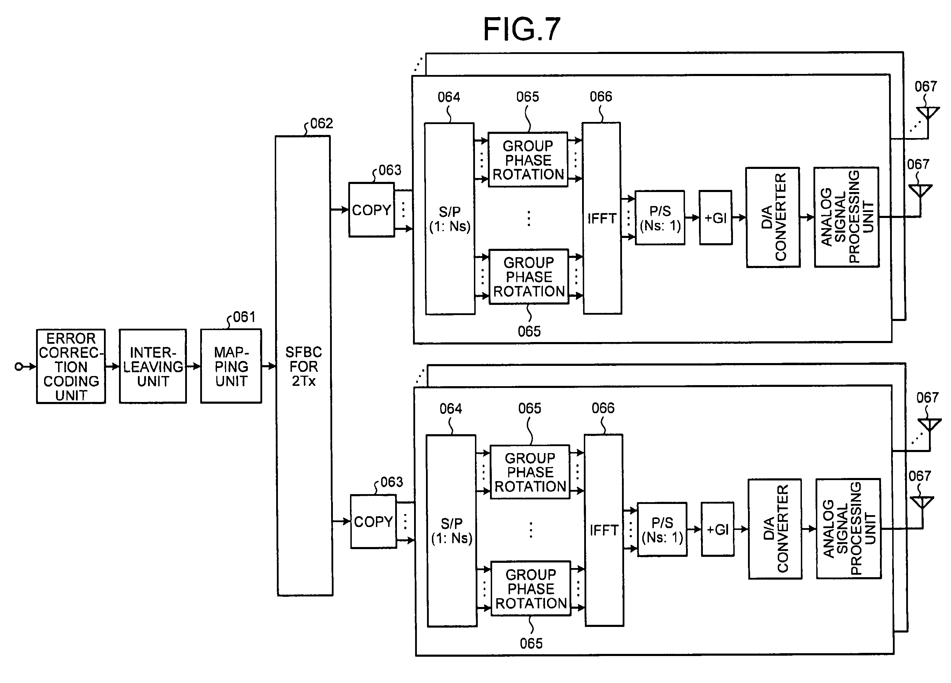

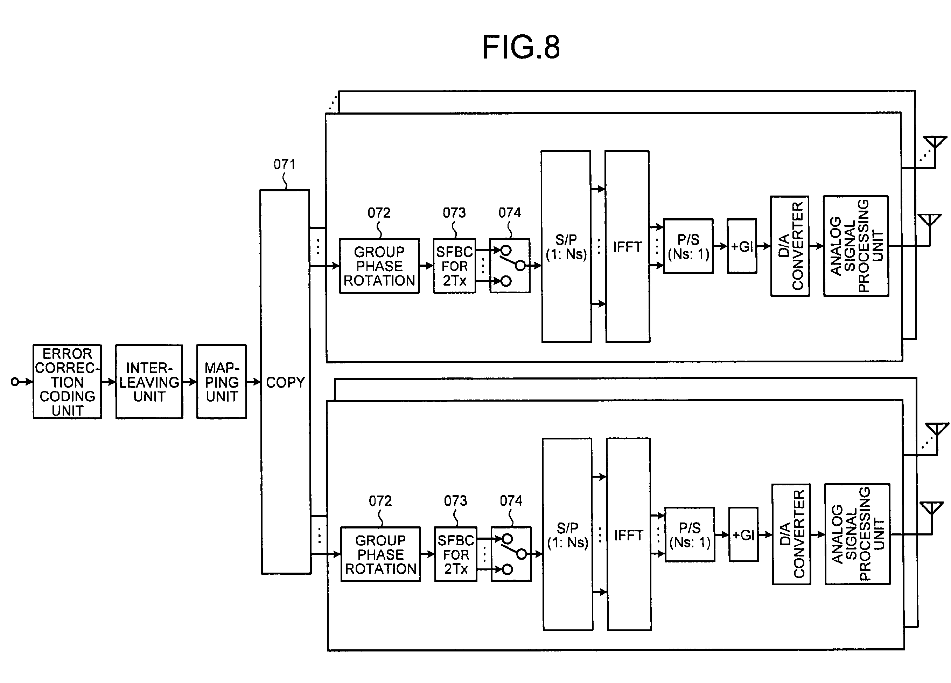

More specifically, SFBC transmission coding for two transmitting antennas is used. The output of the SFBC coding is copied, and the copies of the output are assigned to the third and subsequent transmitting antennas. In this case, two symbols in a symbol sequence are subjected to SFBC coding, and one set of coded symbols for two subcarriers is outputted to each antenna. Each of the coded symbols subjected to SFBC coding is assigned to all the transmitting antennas at the same subcarrier position. For example, two coded symbols in one set that are obtained by SFBC coding of two transmission symbols are assigned to the zero-th and first subcarriers in all the transmitting antennas. FIGS. 7 and 8 are configuration diagrams of transmitters in the present embodiment when the number of transmitting antennas is three or more. However, the transmission coding is not limited to SFBC, and the transmission scheme is not limited to OFDM transmission.

In the present embodiment, a symbol sequence mapped in a mapping unit 061 is subjected to SFBC for two transmitting antennas in an SFBC coding unit 062. This SFBC does not cause a reduction in transmission rate. Then two SFBC-coded symbol sequences are outputted. One of the two transmission coded sequences is copied in a copy unit 063 so that the copy is assigned to the third and subsequent transmitting antennas. Next, the transmission coded symbols are assigned to respective subcarriers in each serial-to-parallel (S/P) conversion unit 064, and a group phase rotation is applied in the group phase rotation unit 065. The group phase rotation is applied in the same manner as in the second embodiment. To take into consideration of the code orthogonality in SFBC for two transmitting antennas, for example, the number of components is $Gf = 2$ subcarriers and $Gt = Nt/2$ OFDM symbols. After group phase rotations are applied, OFDM modulation is performed in the inverse Fourier transformation unit 066, and OFDM signals are transmitted from antennas 067.

On the receiving side, decoding is performed in the same manner as the decoding processing in the second embodiment.

Next, another configuration example is shown below. FIG. 8 shows the configuration of a transmitter when transmission symbols in a transmission block are used as components, and the transmitter includes sequence selection units 074. After copying is performed in a copy unit 071 to make sequences equal in number to the number of transmitting antennas, the signals are grouped in group phase rotation units 072 into groups each including components equal in number to an integer multiple of two (a unit composed of two symbols), and a group phase rotation is applied. Then transmission coding for two transmitting antennas is performed in each SFBC coding unit 073. Next, in selection units 074, one of the two SFBC coded sequences is selected according to any rule, and then the generated OFDM signals are transmitted. The above sequence selection is performed in consideration of the orthogonality of transmission coded signals. No limitation is imposed on the selection. Alternate switching for each OFDM symbol may be performed on each coded signal set. Alternatively, two SFBC coded sequences may be transmitted from at least two of all the transmitting antennas, and random switching may be performed on the rest of the transmitting antennas. Any of these switching operations can increase the number of combinations when the channels between antennas are combined. Therefore, a larger number of combined channels can be obtained as compared to when no switching is performed. A higher diversity effect can thereby be obtained. In the case in which the orthogonality of codes is slightly broken down, least mean-square error detection or an interference cancellation technique is used to minimize the breakdown of the orthogonality, and a high diversity effect can thereby be obtained. These are not limited to the case where SFBC is used as transmission coding, and the transmission scheme is not limited to OFDM transmission.

Fourth Embodiment

The first to third embodiments described above are applicable to fixed communications. In the present embodiment, a description will be given of the case of mobile communications or the case in which stationary and mobile stations are present. More specifically, group phase rotation according to moving speed or propagation environment conditions will be described. In the present embodiment, uplink communication in the OFDM transmission scheme is assumed, and a phase rotation is applied to each group according to propagation environment, so that the quality is expected to be improved in a more adaptive manner. A specific rotation phase rule will be described below. However, the following description is not limited to the OFDM transmission scheme and to the case of uplink communications.

When a mobile terminal in cellular mobile communications can determine its moving speed by some method on the move by walking or car or during high-speed movement such as train radio, the amount of group phase rotation is a function of moving speed v as shown in the formula below.

[Formula 25]

$$P_{n_t}(f,\, t,\, v)$$

This is used to apply group phase rotation. With the above formula, quality can be improved in various environments with different moving speeds of the mobile station. In the following formula, a parameter for the moving speed is further added to the amount of phase rotation shown in the first embodiment.

[Formula 26]

$$P_{n_t}(f,\, t,\, v) \;=\; \exp\left\{ j2\pi \frac{\left(C_{n_t,f}(v)\lfloor f\,/\,G_f\rfloor + C_{n_t,t}(v)\lfloor t\,/\,G_t\rfloor + 1\right)}{Ns} \right\}$$

Generally, when the time selectivity is high (i.e., the variations in channel gain are large), the ability to correct errors in error correction decoding is high. In a stationary environment, because the time selectivity is relatively small, a sufficient decoding effect cannot be obtained during error correction decoding. In the above environment,

[Formula 27]

$$C_{n_t,t(v)}$$

the value of formula 27 is set to be large so that pseudo-time selectivity is generated, and time diversity can thereby be obtained. Therefore, a higher error correction decoding effect can be obtained.

In a relatively high-moving speed environment, the time selectivity is relatively high. However, if the coefficients for determining the amount of phase rotation are excessively larger, a significant reduction in followability occurs during estimation of the propagation path which is obtained by linear interpolation using pilots disposed at predetermined time intervals. This results in an increase in channel estimation error to cause deterioration of transmission quality. Therefore, in such an environment,

[Formula 28]

$$C_{n_t,t(v)}$$

the value of formula 28 is set to be small so that the deterioration is suppressed and the diversity effect can be obtained. The same applies to frequency selectivity.

It is preferable that the amount of phase rotation applied to a plurality of subcarriers used as the components of each of a plurality of groups be at least 360° in the band used. In this case, the amounts of phase rotations applied to adjacent groups are determined by the total number of subcarriers and the number of subcarriers per unit. However, the rule of phase rotation according to moving speed is not limited to the above.

If the radio wave propagation environment of a mobile station can be recognized by some method, the rule of the amount of phase rotation can be changed according to the recognized environment. For example, when a mobile station is in a stationary environment, a base station determines an optimal amount of phase rotation for each group, and notifies the results to the mobile station. The mobile station performs transmission according to the determined amounts of phase rotations. In this manner, the quality is expected to be improved. If two transmitting antennas are used and the phases of groups in one of the transmitting antennas are rotated 360°, one group has a maximum received power, and the amount of phase rotation for this group corresponds to the optimal amount of phase rotation in the above environment. To implement the above example, the base station computes a suitable amount of phase rotation by some method and notifies the receiving side of the computed optimal amount.

Fifth Embodiment

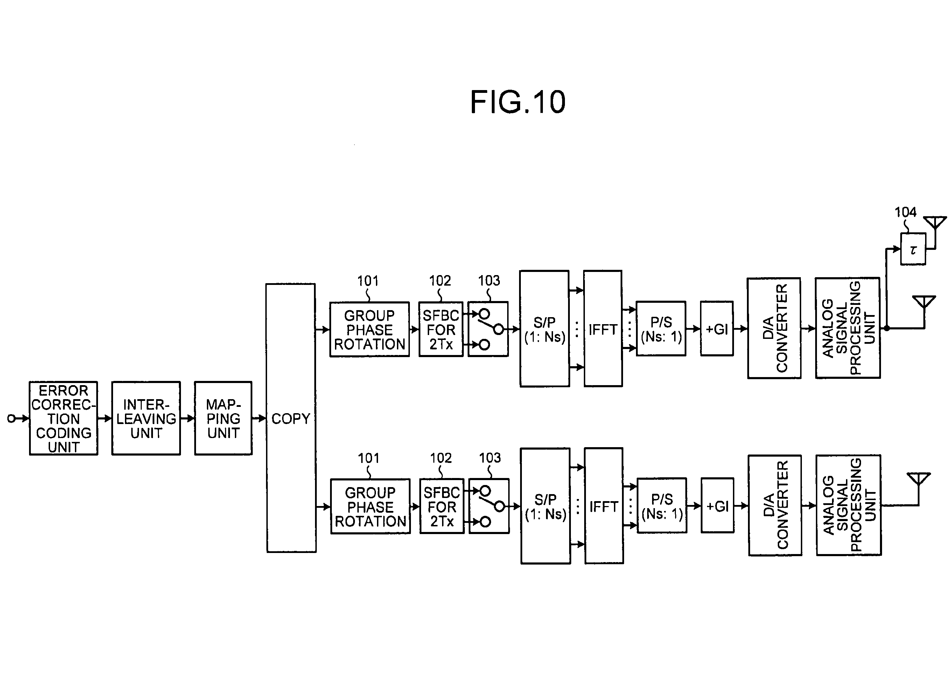

In the present embodiment, a description will be given of phase rotation for each group in consideration of the orthogonality of transmitting signals when an analog delay element is used. In this example, an analog delay element is used, but the invention is not limited thereto and a digital delay element may be used. FIG. 10 shows an example in which group phase rotation with Gf = 1 and Gt = Nt (= 3) is applied to SFBC-OFDM when three transmitting antennas are used. In this case, different phase rotations are applied to subcarriers. In one transmitting antenna, transmission is performed while the analog delay element in a delay providing unit 091 is used to give time delay τ. In this example, the time delay τ (= mTs) is an integer multiple of IFFT sampling time Ts for simplicity, but the invention is not limited thereto. In the present embodiment, the OFDM transmission scheme is used; the number of transmitting antennas is three; and grouping is performed with Gf = 1 and Gt = Nt. However, the invention is not limited thereto. In addition, SFBC is not a limitation.

Generally, when transmission is performed using the above system without application of group phase rotation, the combined channel gains of the f-th and (f+1)-th subcarriers for signals transmitted from two of the transmitting antennas 092 are represented by the following formulas.

[Formula 29]

$$\overline{H}(f) = H_0(f) + H_1(f) \exp(-j2\pi mf / N_s)$$
$$\overline{H}(f + 1) = H_0(f + 1) + H_1(f + 1) \exp\{-j2\pi m(f + 1) / N_s\}$$

Here,
**[0102]**

[Formula 30]

$$H_0(f) = H_0(f + 1)$$

and
**[0104]**

[Formula 31]

$$H_1(f) = H_1(f + 1)$$

hold, i.e., even when two channels for adjacent subcarriers are considered to be substantially the same, due to the delayed transmission,
**[0106]**

[Formula 32]

$$H_1(f) \text{ and } H_1(f + 1)$$

whose complex coefficients
[Formula 33]

$$\exp(-j2\pi mf / N_s), \exp\{-j2\pi m(f + 1) / N_s\}$$

causes
[Formula 34]

$$\exp(-j2\pi m / N_s)$$

which is a phase difference and by the influence thereof the relation between the combined channel gains of adjacent subcarriers is made such that
[Formula 35]

$$\overline{H}(f) \neq \overline{H}(f + 1)$$

holds.
[Formula 36]

$$\overline{H}(f) = \overline{H}(f + 1)$$

If formula 36 holds, the orthogonality of the transmission coded signals is maintained, and interference components caused by the interference between these signals do not remain in the SFBC decoded outputs. However, in the above case, if SFBC decoding processing is performed without any modification, the interference components caused by the interference between the signals remain in the decoded signals.
Therefore, a group phase rotation represented by the following exemplary formula in consideration of the orthogonality of transmitting signals is applied in advance in a phase rotation processing unit for each group.
[Formula 37]

$$P(f, t) = \exp\left\{j2\pi m' \frac{\lfloor f / 2 \rfloor}{Ns}\right\}$$

Here,
**[0119]**

[Formula 38]

$$m'$$

is represented as follows.
[Formula 39]

$$m' = \begin{cases} \dfrac{m}{2} & if \ \ m \ < \ \dfrac{N_s}{2} \\ \dfrac{m \ - \ N_s}{2} & if \ \ m \ \geq \ \dfrac{N_s}{2} \end{cases}$$

In this example,
**[0123]**

[Formula 40]

$$m'$$

is one half of m (or m - Ns), but the value of the denominator is not limited.
With the above operation, the phase rotations represented by the complex coefficients caused by delayed transmission are halved in a subject subcarrier group. Therefore, the transmitting signals can be decoded while the remaining interference on the receiving side caused by the break of the orthogonality of the transmitting signal is reduced. More specifically, by applying the above operation,
**[0126]**

[Formula 41]

$$H_0(f) \ and \ H_0(f+1)$$

the complex coefficients for above formula 41, are given by
[Formula 42]

$$1, \exp(j\pi mf \ / \ N_s)1$$

**[0129]** , and on the other hand,
**[0130]**

[Formula 43]

$$H_1(f) \ and \ H_1(f+1)$$

the complex factors for formula 43 are given by
$$[\text{Formula } 44]$$

$$\exp(-j2\pi m f / N_s), \exp(-j2\pi m f / N_s) \cdot \exp(-j\pi m f / N_s).$$

In the above example, f corresponds to an even numbered subcarrier. The relation between combined channels for adjacent subcarriers is
$$[\text{Formula } 45]$$

$$\overline{H}(f) \neq \overline{H}(f + 1).$$

However,
**[0136]**

$$[\text{Formula } 46]$$

$$H_0(f)$$

and
**[0138]**

$$[\text{Formula } 47]$$

$$H_1(f)$$

the phase difference between formula 46 and 47 is given by
$$[\text{Formula } 48]$$

$$\exp(\pm j\pi m f / N_s).$$

Therefore, with the above operation,
**[0142]**

$$[\text{Formula } 49]$$

$$|\exp(\pm j\pi m f / N_s)|^2 \leq |\exp(-j2\pi m / N_s)|^2$$

holds. The break of the orthogonality in transmission coding caused by introduction of the delay element can thereby be reduced.
According to the present embodiment, a transmission amplifier can construct a transmission diversity system irrespective of the number of transmitting antennas. In addition, a frequency diversity effect can be obtained while the break of the orthogonality in transmission coding is reduced.
FIG. 11 is the configuration of a transmitter when transmission symbols in a transmission block are used as components. Signals are grouped in group phase rotation units 101 into groups each including components equal in number to an integer multiple of two (a unit composed of two symbols), and a group phase rotation is applied. Then transmission coding for two transmitting antennas is performed in SFBC coding units 102. Next, in selection units 103, one of the two SFBC coded sequences is selected according to any rule, and then OFDM signals are generated. In FIG. 22, an OFDM signal to which time delay has been applied in a delay providing unit 104 is simultaneously transmitted from one of the transmitting antennas.

The orthogonality of transmitting signals can be maintained by subcarrier assignment in consideration of the orthogonality of transmitting signals. For example, when delayed transmission similar to that in the above case is performed, the phase rotations applied to channel gains due to the delayed transmission have the same Ns/m period. In a frequency non-selective environment or a relatively low-frequency selectivity environment, a plurality of subcarriers having the same phase rotation are assumed to have the same combined channel gain

[Formula 50]

$$\overline{H}(f).$$

Therefore, by mapping a plurality of symbols subjected to transmission coding for the plurality of subcarriers, the orthogonality of the transmitting signals can be maintained.

The present invention is not limited to the embodiments described above. When the invention is actually embodied, the constituent elements can be modified within a range predictable from the above description. The invention is not limited to wireless communications and is applicable to wire communications such as optical communications.

Industrial Applicability

As described above, this invention is applicable to a communication system for transmission and reception using a plurality of antennas.

Reference Signs List

001 ERROR CORRECTION CODING UNIT

002 INTERLEAVING UNIT
003 MAPPING UNIT
004 COPY UNIT
005 SERIAL-TO-PARALLEL (S/P) CONVERSION UNIT
006 GROUP PHASE ROTATION UNIT
007 INVERSE FOURIER TRANSFORMATION UNIT
008 GUARD INTERVAL INSERTION UNIT
009 ANTENNA
011 RECEIVING ANTENNA
012 GUARD INTERVAL REMOVAL UNIT
013 FOURIER TRANSFORMATION UNIT
014 COMBINED CHANNEL GAIN ESTIMATION PROCESSING UNIT
015 FREQUENCY-DOMAIN EQUALIZATION PROCESSING UNIT
016 SOFT DECISION UNIT
017 DEINTERLEAVING UNIT
018 ERROR CORRECTION DECODING UNIT
020 COPY UNIT
021 GROUP PHASE ROTATION UNIT
031 MAPPING UNIT
032 SFBC CODING UNIT
033 SERIAL-TO-PARALLEL (S/P) CONVERSION UNIT
034 GROUP PHASE ROTATION UNIT
041 COPY UNIT
042 GROUP PHASE ROTATION UNIT

043    SFBC CODING UNIT
044    SELECTION UNIT
050    RECEIVING ANTENNA
051    FOURIER TRANSFORMATION UNIT
052    CHANNEL GAIN ESTIMATION UNIT
053    SFBC DECODING PROCESSING UNIT
061    MAPPING UNIT
062    SFBC CODING UNIT
063    COPY UNIT
064    SERIAL-TO-PARALLEL (S/P) CONVERSION UNIT
065    GROUP PHASE ROTATION UNIT
066    INVERSE FOURIER TRANSFORMATION UNIT
067    ANTENNA
071    AFTER COPY UNIT
072    GROUP PHASE ROTATION UNIT
073    SFBC CODING UNIT
074    SELECTION UNIT
081    ANTENNA
082    FOURIER TRANSFORMATION UNIT
083    COMBINED CHANNEL GAIN ESTIMATION UNIT
084    SFBC DECODING PROCESSING UNIT
091    DELAY PROVIDING UNIT
092    ANTENNA
101    GROUP PHASE ROTATION UNIT
102    SFBC CODING UNIT
103    SELECTION UNIT
104    DELAY PROVIDING UNIT

**Claims**

1.  A communication device, comprising:

    a copy unit that copies a group composed of a predetermined number of symbols for one or a plurality of carriers to produce a plurality of groups;
    a phase rotation unit that applies different phase rotations to the plurality of groups; and
    a plurality of transmitting antennas that transmits, to a receiver, the plurality of respective groups to which the phase rotations have been applied.

2.  The communication device according to claim 1, wherein
    an orthogonal frequency division multiplexing scheme (OFDM scheme) is employed as a communication scheme, and
    the copy unit produces the plurality of groups by copying a group in transmission data, the group being composed of a predetermined number of symbol and a predetermined number of subcarrier.

3.  The communication device according to claim 1 or 2, wherein the product of the numbers of carriers and symbols constituting the group is an integer multiple of the number of antennas.

4.  The communication device according to claim 1 or 2, wherein the phase rotation unit applies a phase rotation to each of the groups in consideration of orthogonality of transmitting signals.

5.  The communication device according to claim 1 or 2, wherein the phase rotation unit determines a phase rotation for each of the groups according to conditions of radio wave propagation or a moving speed of a mobile station.

6.  The communication device according to claim 1 or 2, further comprising a signal delay unit that gives a delay of a predetermined time to a signal, the signal delay unit being provided on an input side of at least one of the plurality of antennas, wherein
    the phase rotation unit gives a delay corresponding to the predetermined time to a group to be transmitted from the antenna to which the signal delay unit is provided.

# FIG.1

# FIG.2

011

ANALOG SIGNAL PROCESSING UNIT → A/D CON-VERTER (012) → -GI (013) → FFT → FREQUENCY DOMAIN EQUALIZATION PROCESSING UNIT (015) → SOFT DECISION UNIT (016) → DEINTER-LEAVING UNIT (017) → ERROR CORREC-TION DECODING UNIT (018)

COMBINED CHANNEL GAIN ESTIMATION PROCESSING UNIT (014)

# FIG.3

FIG.4

# FIG.5

EP 2 442 471 A1

# FIG.6

050

ANALOG SIGNAL PROCESSING UNIT

A/D CONVERTER

-GI

FFT ⌐051

⋮

SFBC DECODING PROCESSING UNIT ⌐053

⋮ ⌐052

COMBINED CHANNEL GAIN ESTIMATION UNIT

SOFT DECISION UNIT

DEINTER-LEAVING UNIT

ERROR CORREC-TION DECODING UNIT

EP 2 442 471 A1

# FIG.7

# FIG.8

# FIG.9

EP 2 442 471 A1

# FIG.10

EP 2 442 471 A1

# FIG.11

ONE GROUP
(NUMBER OF COMPONENTS: 4)

Gt: NUMBER OF OFDM SYMBOLS

Gf: NUMBER OF SUBCARRIERS

(REFERENCE)
ONE OFDM SYMBOL

t

... ... f

SYMBOL SEQUENCE → S/P → GROUP PHASE ROTATION → IFFT →

# FIG.12

ONE GROUP
(NUMBER OF COMPONENTS: 4)

... ... t

Gb: NUMBER OF SYMBOLS

SYMBOL SEQUENCE → GROUP PHASE ROTATION → S/P (1: Ns) → IFFT →

<table>
<tr><td colspan="2" align="center">**INTERNATIONAL SEARCH REPORT**</td><td colspan="2">International application No.<br>PCT/JP2010/059973</td></tr>
<tr><td colspan="4">A.   CLASSIFICATION OF SUBJECT MATTER<br>*H04J99/00*(2009.01)i, *H04B7/04*(2006.01)i, *H04B7/06*(2006.01)i, *H04J11/00*<br>(2006.01)i</td></tr>
<tr><td colspan="4">According to International Patent Classification (IPC) or to both national classification and IPC</td></tr>
<tr><td colspan="4">B.   FIELDS SEARCHED</td></tr>
<tr><td colspan="4">Minimum documentation searched (classification system followed by classification symbols)<br>H04J99/00, H04B7/04, H04B7/06, H04J11/00</td></tr>
<tr><td colspan="4">Documentation searched other than minimum documentation to the extent that such documents are included in the fields searched<br>      Jitsuyo Shinan Koho          1922-1996   Jitsuyo Shinan Toroku Koho    1996-2010<br>      Kokai Jitsuyo Shinan Koho    1971-2010   Toroku Jitsuyo Shinan Koho    1994-2010</td></tr>
<tr><td colspan="4">Electronic data base consulted during the international search (name of data base and, where practicable, search terms used)</td></tr>
</table>

C.   DOCUMENTS CONSIDERED TO BE RELEVANT

| Category* | Citation of document, with indication, where appropriate, of the relevant passages | Relevant to claim No. |
|---|---|---|
| X<br>Y | NTT DoCoMo, Multi-Drgree Cyclic Delay Diversity with Frequency-domain Channel Dependent Schduling, 3GPP TSG WG1 Meeting #46 R1-062107, 2006.08.28 | 1-3,5<br>4 |
| Y | JP 2009-60420 A  (Sharp Corp.),<br>19 March 2009 (19.03.2009),<br>fig. 5<br>(Family: none) | 4 |
| A | JP 2007-523550 A  (NTT Docomo Inc.),<br>16 August 2007 (16.08.2007),<br>entire text; all drawings<br>& EP 1716680 A          & WO 2005/081481 A | 1-6 |

| ☒   Further documents are listed in the continuation of Box C. | ☐   See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>      13 July, 2010 (13.07.10) | Date of mailing of the international search report<br>      27 July, 2010 (27.07.10) |
|---|---|
| Name and mailing address of the ISA/<br>      Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2010/059973 |

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2008/47722 A1  (Sharp Corp.),<br>24 April 2008 (24.04.2008),<br>fig. 16<br>(Family: none) | 1-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006081131 A


**Non-patent literature cited in the description**

- **Ciochina, C. ; Castelain, D. ; Mottier, D. ; Sari, H.** Single-Carrier Space-Frequency Block Coding: Performance Evaluation. *Vehicular Technology Conference, 2007. VTC-2007 Fall. 2007 IEEE 66th,* 30 September 2007, 715-719